# EUROPEAN PATENT SPECIFICATION

(11) **EP 4 261 762 B1**
(45) Date of publication and mention of the grant of the patent: **07.08.2024**
(21) Application number: 23167693.3
(22) Date of filing: 13.04.2023
(51) Int. Cl.: G06Q 40/02, G06N 20/00, G06N 7/01, G06Q 30/0201, G06Q 40/08

(54) **SYSTEMS AND METHODS FOR DATA EXPLORATION ANALYSIS BASED CONVENANTS CATEGORIZATION AND RECOMMENDATION THEREOF**
SYSTEME UND VERFAHREN ZUR DATENEXPLORATIONSANALYSE AUF DER BASIS VON UMWANDLUNGEN UND EMPFEHLUNGEN DAFÜR
SYSTÈMES ET PROCÉDÉS POUR UNE CATÉGORISATION DE CONSTITUANTS BASÉE SUR UNE ANALYSE D'EXPLORATION DE DONNÉES ET RECOMMANDATION ASSOCIÉE

(30) Priority: 13.04.2022 IN 202221022181
(43) Date of publication of application: 18.10.2023
(73) Proprietor: Tata Consultancy Services Limited, Maharashtra (IN)
(72) Inventor: ACHARYA, KUNJA BEHARI, 751024 Bhubaneswar, Odisha (IN); IYER, VIVEK, 411057 Pune, Maharashtra (IN); SOREN, JOHN Sunil, 122004 Gurugram, Haryana (IN); PANIGRAHI, SANJAYA KUMAR, 751024 Bhubaneswar, Odisha (IN); RAMAR, RAJESH, 560066 Bangalore, Karnataka (IN)
(74) Representative: Goddar, Heinz J.

(56) References cited:
- US-A1- 2019 102 835
- US-A1- 2020 184 556
- CHRISTENSEN HANS B ET AL: "Financial shocks to lenders and the composition of financial covenants", JOURNAL OF ACCOUNTING AND ECONOMICS, NORTH-HOLLAND, AMSTERDAM, NL, vol. 73, no. 1, 21 June 2021 (2021-06-21), XP086970152, ISSN: 0165-4101, [retrieved on 20210621], DOI: 10.1016/J.JACCECO.2021.101426

## Description

### CROSS-REFERENCE TO RELATED APPLICATIONS AND PRIORITY

The present application claims priority to Indian application, Application No. 202221022181, filed in India on April 13, 2022.

### TECHNICAL FIELD

The disclosure herein generally relates to covenants recommendation systems, and, more particularly, to systems and methods for data exploration analysis based covenants categorization and recommendation thereof.

### BACKGROUND

Banking processes such as **'loan origination' are well established** processes that majority of the banks/financial institutions use to ensure the safety of **their funds disbursed. The 'loan origination' process is highly standardized across** banks. However, there are sub-process, such as covenant management, which are weak links in the entire process. Covenant refers to a set of conditions included (or to be included) in an agreement that is being executed between a lender and a borrower. These covenants need to be complied by the borrower and in case of any breach in compliance, responsible entities such as financial institutions and/or banking systems need to take appropriate measures/actions. The covenant management process is largely dependent on the discretion of the credit underwriter of the bank (or the banking system). This has led to a lot of bias at the time of underwriting of the loan which may lead to credit risk creeping in the loan disbursement process.

Documents US 2020/184556 A1 and US 2019/102835 A1 describe loan management systems using machine learning.

### SUMMARY

Embodiments of the present disclosure present technological improvements as solutions to one or more of the above-mentioned technical problems recognized by the inventors in conventional systems.

For example, in one aspect, there is provided a processor implemented method for data exploration analysis based covenants categorization and recommendation thereof. The method comprises: obtaining, via one or more hardware processors, an input training data comprising historical details of one or more entities, historical loan information corresponding to the one or more entities, and one or more corresponding recommended covenants; performing, via the one or more hardware processors, a data exploration analysis on the input training data to obtain one or more covenants of at least one of a first covenant category and a second covenant category; training, by using a binary technique via the hardware processors, a first machine learning model based on the input training data and one or more covenants of the first covenant category to obtain a first trained machine learning model; obtaining at least a subset of the input training data; and iteratively performing, for each covenant of the second covenant category, until a number of predicted covenants corresponding to the second covenant category is less than or equal to an iteration count: processing, by using a classification technique via the one or more hardware processors, the at least the subset of the input training data and one or more covenants of the second covenant category to obtain a set of predicted covenants; performing a comparison of (i) number of covenants of the second covenant category comprised in the set of predicted covenants, and (ii) the iteration count; and training, via the one or more hardware processors, a second machine learning model based on the comparison to obtain a second trained machine learning model, wherein the second trained machine learning model is obtained based on one or more intermediary machine learning models being trained at each iteration.

In an embodiment, the first covenant category is a disconnected dependent covenant category.

In an embodiment, the second covenant category is a connected dependent covenant category.

In an embodiment, the method further comprises obtaining, via the one or more hardware processors, a test loan application corresponding to an entity; applying the first trained machine learning model and the second trained machine learning model on the test loan application corresponding to the entity to obtain a plurality of predicted covenants corresponding to at least one of the first covenant category and the second covenant category; applying, a probability technique via the one or more hardware processors, on the plurality of predicted covenants corresponding to at least one of the first covenant category and the second covenant category to obtain a set of sorted predicted covenants and an associated probability score thereof; and recommending, via the one or more hardware processors, at least a subset of sorted predicted covenants from the set of sorted predicted covenants to a user based on the associated probability score.

In an embodiment, the method further comprises obtaining a feedback from the user on the at least the subset of sorted predicted covenants; and training the first trained machine learning model and the second trained machine learning model using the feedback.

In another aspect, there is provided a processor implemented system for data exploration analysis based covenants categorization and recommendation thereof. The system comprises: a memory storing instructions; one or more communication interfaces; and one or more hardware processors coupled to the memory via the one or more communication interfaces, wherein the one or more hardware processors are configured by the instructions to: obtain an input training data comprising historical details of one or more entities, historical loan information corresponding to the entities, and one or more corresponding recommended covenants; perform a data exploration analysis on the input training data to obtain one or more covenants of at least one of a first covenant category and a second covenant category; train, by using a binary technique, a first machine learning model based on the input training data and one or more covenants of the first covenant category to obtain a first trained machine learning model; obtain at least a subset of the input training data; and iteratively perform, for each covenant of the second covenant category, until a number of predicted covenants corresponding to the second covenant category is less than or equal to an iteration count: processing, by using a classification technique, the at least the subset of the input training data and one or more covenants of the second covenant category to obtain a set of predicted covenants; performing a comparison of (i) number of covenants of the second covenant category comprised in the set of predicted covenants, and (ii) the iteration count; and training a second machine learning model based on the comparison to obtain a second trained machine learning model, wherein the second trained machine learning model is obtained based on one or more intermediary machine learning models being trained at each iteration.

In an embodiment, the first covenant category is a disconnected dependent covenant category.

In an embodiment, the second covenant category is a connected dependent covenant category.

In an embodiment, the one or more hardware processors are further configured by the instructions to obtain a test loan application corresponding to an entity; apply the first trained machine learning model and the second trained machine learning model on the test loan application corresponding to the entity to obtain a plurality of predicted covenants corresponding to at least one of the first covenant category and the second covenant category; apply, a probability technique, on the plurality of predicted covenants corresponding to at least one of the first covenant category and the second covenant category to obtain a set of sorted predicted covenants and an associated probability score thereof; and recommend at least a subset of sorted predicted covenants from the set of sorted predicted covenants to a user based on the associated probability score.

In an embodiment, the one or more hardware processors are further configured by the instructions to obtain a feedback from the user on the at least the subset of sorted predicted covenants; and train the first trained machine learning model and the second trained machine learning model using the feedback.

In yet another aspect, there are provided one or more non-transitory machine-readable information storage mediums comprising one or more instructions which when executed by one or more hardware processors cause data exploration analysis based covenants categorization and recommendation thereof, by obtaining an input training data comprising historical details of one or more entities, historical loan information corresponding to the entities, and one or more corresponding recommended covenants; performing a data exploration analysis on the input training data to obtain one or more covenants of at least one of a first covenant category and a second covenant category; training, by using a binary technique, a first machine learning model based on the input training data and one or more covenants of the first covenant category to obtain a first trained machine learning model; obtaining at least a subset of the input training data; and iteratively performing, for each covenant of the second covenant category, until a number of predicted covenants corresponding to the second covenant category is less than or equal to an iteration count: processing, by using a classification technique, the at least the subset of the input training data and one or more covenants of the second covenant category to obtain a set of predicted covenants; performing a comparison of (i) number of covenants of the second covenant category comprised in the set of predicted covenants, and (ii) the iteration count; and training a second machine learning model based on the comparison to obtain a second trained machine learning model, wherein the second trained machine learning model is obtained based on one or more intermediary machine learning models being trained at each iteration.

In an embodiment, the first covenant category is a disconnected dependent covenant category.

In an embodiment, the second covenant category is a connected dependent covenant category.

In an embodiment, the one or more instructions which when executed by one or more hardware processors further cause obtaining a test loan application corresponding to an entity; applying the first trained machine learning model and the second trained machine learning model on the test loan application corresponding to the entity to obtain a plurality of predicted covenants corresponding to at least one of the first covenant category and the second covenant category; applying, a probability technique, on the plurality of predicted covenants corresponding to at least one of the first covenant category and the second covenant category to obtain a set of sorted predicted covenants and an associated probability score thereof; and recommending at least a subset of sorted predicted covenants from the set of sorted predicted covenants to a user based on the associated probability score.

In an embodiment, the one or more instructions which when executed by one or more hardware processors further cause obtaining a feedback from the user on the at least the subset of sorted predicted covenants; and training the first trained machine learning model and the second trained machine learning model using the feedback.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 depicts an exemplary system for data exploration analysis-based covenants categorization and recommendation thereof, in accordance with an embodiment of the present disclosure.
FIG. 2 depicts an exemplary flow chart illustrating a method for data exploration analysis-based covenants categorization and recommendation thereof, using the system of FIG. 1, in accordance with an embodiment of the present disclosure. In an embodiment.
FIG. 3A and FIG. 3B, with reference to FIGS. 1-2, depict a data exploration analysis of covenants (or covenants correlation analysis) of the input training data using the system of FIG. 1, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

**Banking processes such as 'loan origination' are w**ell established processes that majority of the banks/financial institutions use to ensure the safety of **their funds disbursed. The 'loan origination' process is highly standardized across** banks. However, there are sub-process, such as covenant management, which are weak links in the entire process. Covenant refers to a set of conditions included (or to be included) in an agreement that is being executed between a lender and a borrower. These covenants need to be complied by the borrower and in case of any breach in compliance, responsible organizations such as financial institutions and/or banking systems need to take appropriate measures/actions. The covenant management process is largely dependent on the discretion of the credit underwriter of the bank (or the banking system). This has led to a lot of bias at the time of underwriting of the loan which may lead to credit risk creeping in the loan disbursement process. Covenant management is a mechanism through which banks or loan originators can control and monitor the entities (e.g., individuals, business owners, organizations, or borrowers) to which it has advanced or extended. Covenants is the first line of defense that the banking systems (or financial institutions) have while administering a loan. This also helps the banking systems to proactively monitor the performance of a business and identify any potential cause of credit quality degradation and initiate appropriate interventions to ensure quality of the credit (e.g., loan).

A typical commercial loan origination, review and approval goes through the following processes. Firstly, the loan is originated by the relationship manager by entering customer financial details, loan details, collateral, etc. Then the details are reviewed, and underwriter goes through the loan proposal document and manually enters the covenants based on the customer details and loan details available. Underwriter uses their best judgment in assigning the covenants for the specific customers loans. The process is based on individ**ual's assessment and** judgment and can be subjective.

Conventional approaches have involved manual review processes and human intervention for providing any recommendations in loan origination process in banks. More specifically, conventional approaches fail to recommend covenants based on customer financial data, management information or industry trends, etc. Embodiments of the present disclosure provide systems and methods that implement data exploration analysis which bridges the gap where underwriter solely decides the covenants based on his/her experience without considering experience of other underwriters and similar type of customers historical records in the bank. More specifically, embodiments of the present disclosure provide a covenants management system and method that implement a real-time covenant recommendation engine using machine learning (supervised or unsupervised or semi-supervised) models that leverages entities (e.g., customers), deals and stipulations historical data and recommends in real time covenants for a specific industry, loan based on the input details provided. The model also considers seasonality parameters, recession specific parameters, and the like. Underwriter gets a list of covenants, and the selection of underwriter is also sent back to model (e.g., machine learning (ML) model(s)) for further tuning for better learning/training of the machine learning (ML) models.

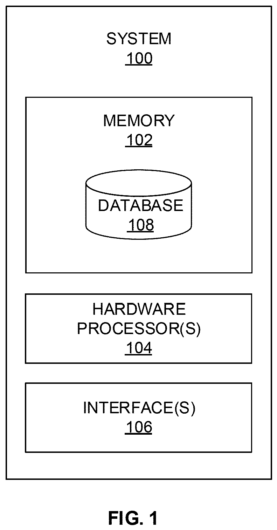

Referring now to the drawings, and more particularly to FIG. 1 through 3B, where similar reference characters denote corresponding features consistently throughout the figures, there are shown preferred embodiments and these embodiments are described in the context of the following exemplary system and/or method.

FIG. 1 depicts an exemplary system 100 for data exploration analysis-based covenants categorization and recommendation thereof, in accordance with an embodiment of the present disclosure. In an embodiment, the system 100 may also be referred as covenants management system or covenants recommendation system and may be interchangeably used herein. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises input training data comprising historical details of one or more entities, historical loan information corresponding to the entities, and one or more corresponding recommended covenants data exploration analysis, Machine Learning (ML) model(s), and the like. The database 108 further comprises various covenants categories, predicted covenants, user feedback collected periodically as per requirements for the covenants recommended by the system 100, and information on training the ML models, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

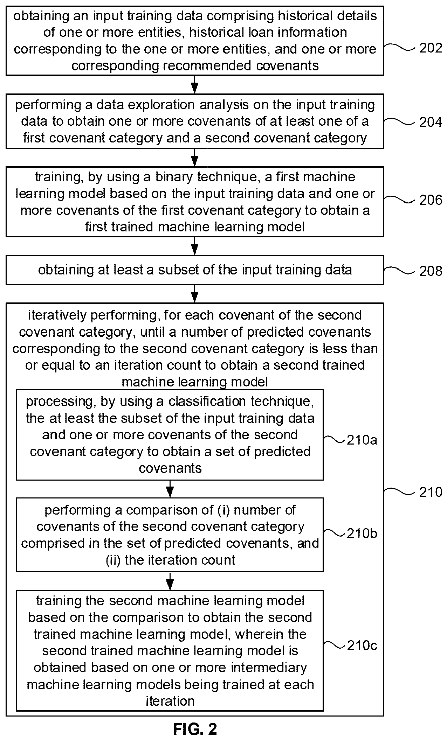

FIG. 2 depicts an exemplary flow chart illustrating a method for data exploration analysis-based covenants categorization and recommendation thereof, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIG. 2.

In an embodiment, at step 202 of the present disclosure, the one or more hardware processors 104 obtain an input training data comprising historical details of one or more entities, historical loan information corresponding to the entities, and one or more corresponding recommended covenants. In an embodiment, the one or more entities may include, but are not limited to, users, companies/organizations, banks, financial institutions, and the like. Below Table 1 illustrates historical details of one or more entities, in an example embodiment.

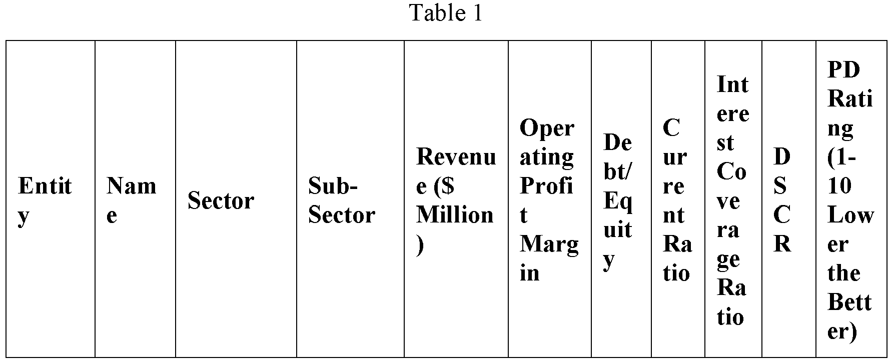

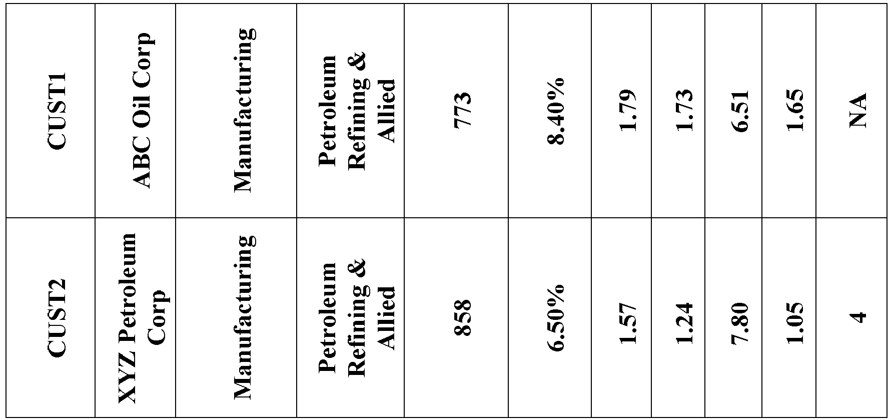

Below Table 2 illustrates historical loan information corresponding to the entities, in an example embodiment.

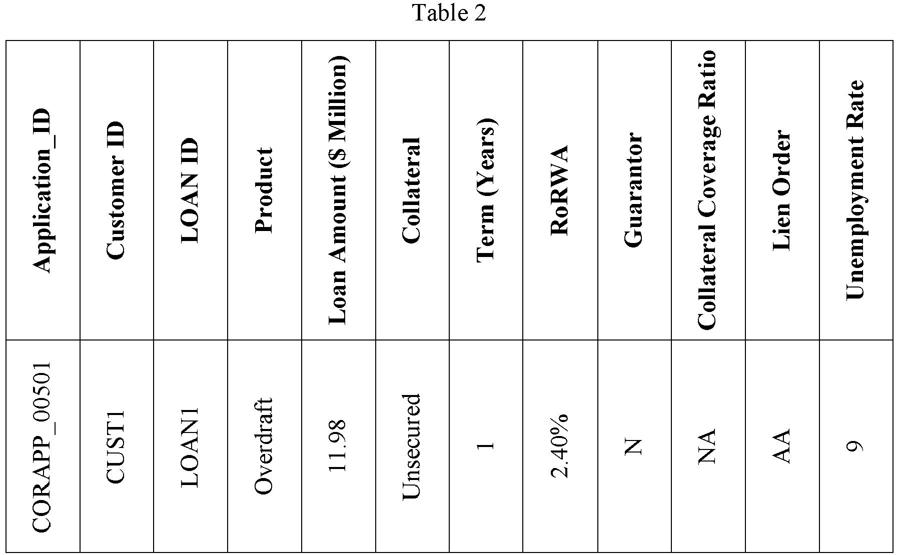

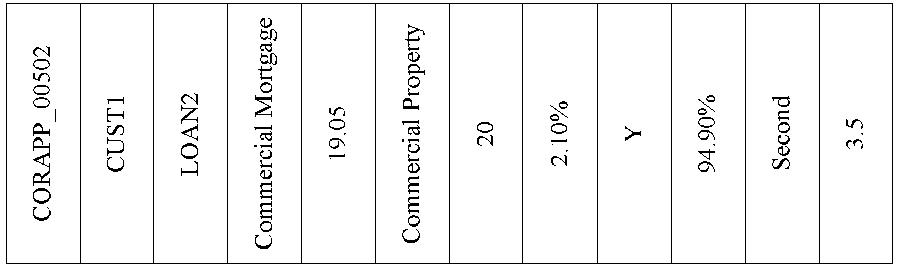

Below Tables 3a and 3b illustrate the one or more corresponding recommended covenants, in an example embodiment.

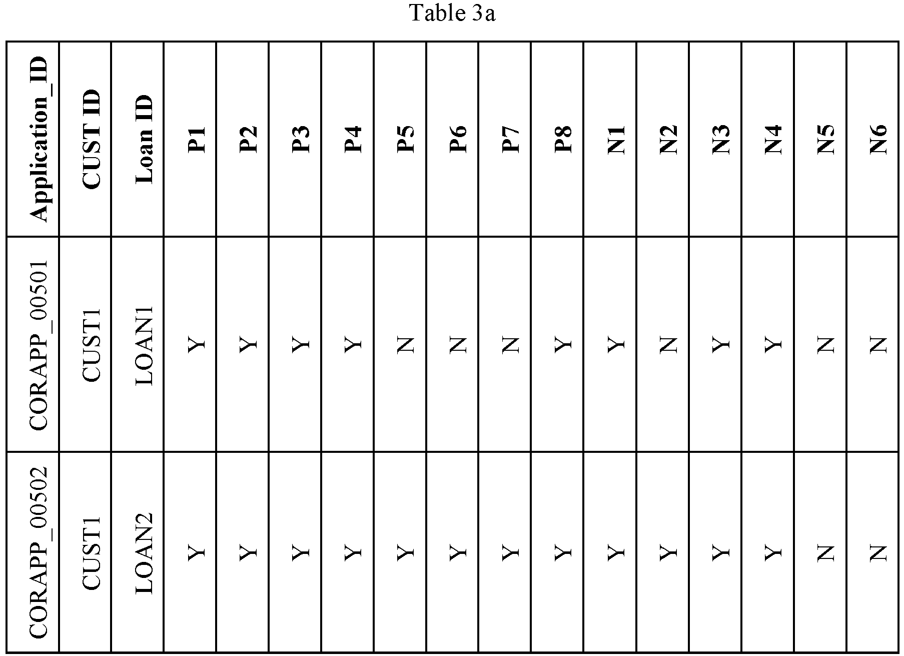

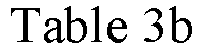

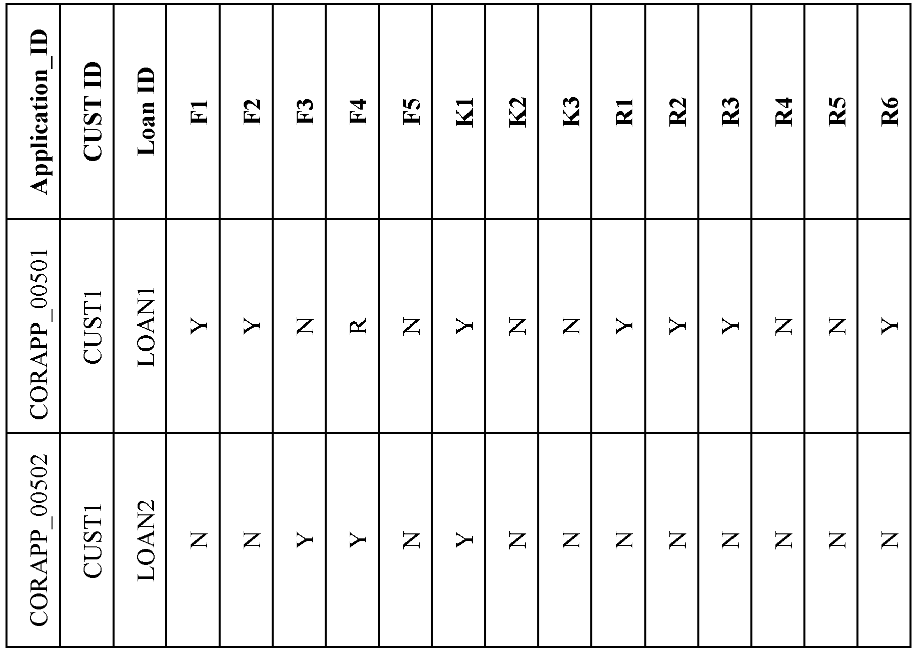

Below are further examples of covenants that were recommended.

**Table 4**

| | **Positive Covenants** |
|---|---|
| P1 | Present financial statements within 45 days of end of quarter |
| P2 | Maintain life insurance policies on key employees |
| P3 | Maintain property insurance |
| P4 | Pay all property and income taxes on time |
| P5 | Yearly Valuation of Collateral |
| P6 | Minimum Networth for Guarantor |
| P7 | Submit Confirmed Bill of Materials Prior to Disbursement |
| P8 | Pricing Exception Approval |

**Table 5**

| | **Negative Covenants** |
|---|---|
| N1 | Incur additional debt |
| N2 | Make a change in ownership |
| N3 | Proceeds of Asset Sales to be Used only for Loan Repayments |
| N4 | Mergers and acquisitions without bank's permission |
| N5 | Restriction on or forbidding distributions and/or dividends paid to shareholders |
| N6 | Issue debt more senior than the current debt |

**Table 6**

| | **Financial Covenants** |
|---|---|
| F1 | Current Ratio |
| F2 | Interest Coverage Ratio |
| F3 | Debt Service Coverage Ratio |
| F4 | Debt/ Equity (Normal) |
| F4 (R) | Debt / Equity (Recession) |
| F5 | Operating Profit Margin |

**Table 7**

| | **Key Performance Indicators (KPIs)** |
|---|---|
| K1 | Crude Oil Price |
| K2 | Steel Price |
| K3 | Aluminum Prices |

**Table 8**

| | **Recession Covenants** |
|---|---|
| R1 | Restriction on Buybacks |
| R2 | Interest Rate Floor |
| R3 | Mandatory Pre-Payment Clause |
| R4 | Anti-Cash Hoarding |
| R5 | Restriction on Use of Loan Proceeds to Repay Other Loans |
| R6 | Limitation on Executive Compensation |

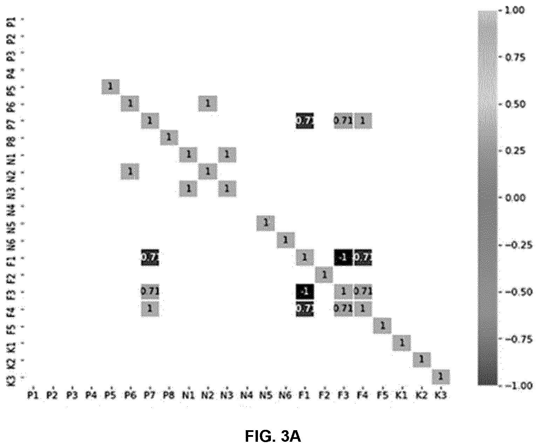

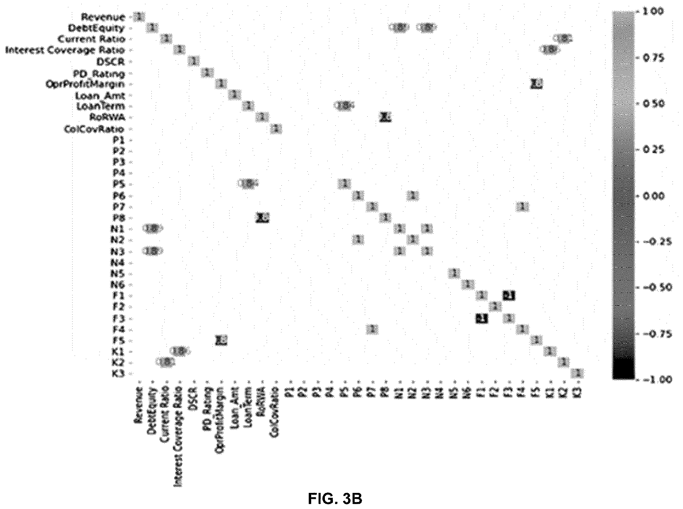

In an embodiment, at step 204 of the present disclosure, the one or more hardware processors 104 perform a data exploration analysis on the input training data to obtain one or more covenants of at least one of a first covenant category, and a second covenant category. In an embodiment, the data exploration analysis includes multi-label data analysis. The first covenant category is a disconnected dependent covenant category, and the second covenant category is a connected dependent covenant category. Disconnected dependent covenants refer to covenants that are not dependent on each other and Connected dependent covenants refer to covenants that are dependent on each other, in an embodiment of the present disclosure. Based on the above tables, the covenants connections are identified through a covariance based statistical method (state of the art method) that measures the association between them. The outcome of this step or analysis is positive, negative or zero correlation between covenants. For instance, Covenants P1, P2, P3 and P4 are highly correlated (or say these covenants fall under second covenant category - say connected dependent covenants). Similarly, covenant N4 is highly correlated with P1, P2, P3 and P4. Covenant P6 is corrected to N2 (referred as connected dependent covenant). P7 is highly correlated to F4, negatively correlated to F1 and positively correlated to F2 (wherein negatively correlated to F1 refers to disconnected dependent covenant). Similarly, N1 is highly correlated to N3, F1 is negatively correlated to F3 and F4, and F3 is positively correlated to F4. FIG. 3A and FIG. 3B, with reference to FIGS. 1-2, depict a data exploration analysis of covenants (or covenants correlation analysis) of the input training data using the system 100 of FIG. 1, in accordance with an embodiment of the present disclosure. More specifically, FIG. 3 illustrates covenants correlation analysis to determine which of the covenants can be categorized as a disconnected dependent covenant or a connected dependent covenant. In FIG. 3B, it is shown that Debt/Equity is highly corelated with N1 and N3, Current ratio is highly correlated to K2, Interest Coverage Ratio is highly corelated with K1, Term (Years) is highly correlated with P5, Operating profit margin is inversely related with F5, RORWA is inversely related with P8, and K3 is directly related to sub sector of Auto.

In an embodiment, once the covenants of the first covenant category and the second covenant category are identified and/or obtained, at step 206 of the present disclosure, the one or more hardware processors 104 train, by using a binary technique, a first machine learning model based on the input training data and one or more covenants of the first covenant category to obtain a first trained machine learning model. More specifically, from the covenant correlation analysis, independent covenants are identified and are modeled using a binary technique. This technique divides multi-label learning task into independent binary tasks based on number of labels present in the data (or input training data). The binary technique may include but is not limited to Spearman correlation, and such technique shall not be construed as limiting the scope of the present disclosure. The first trained machine learning model may include but is not limited to a multinomial Naive Bayes (NB) classification model, a support vector classifier (SVC), Decision Tree, and the like. Such examples of first trained machine learning model shall not be construed as limiting the scope of the present disclosure. From the output variable correlation analysis, it is evident that the following covenants are completely independent and using Binary Relevance technique on the Positive covenants - P5 and P8, Negative covenants - N5 and N6, Financial covenants - F2 and F5, and KPI covenants - K1, K2 and K3, the first machine learning model is trained to obtain the first trained machine learning model.

In an embodiment, at step 208 of the present disclosure, the one or more hardware processors 104 obtain at least a subset of the input training data. In an embodiment, at step 210 of the present disclosure, the one or more hardware processors 104 iteratively perform, for each covenant of the second covenant category, until a number of predicted covenants corresponding to the second covenant category is less than or equal to an iteration count to obtain a second trained machine learning model. Examples of the second trained machine learning model may include but are not limited to, logistic regression model, Decision Tree, Random Forest, and the like. Such examples of the second trained machine learning model shall not be construed be construed as limiting the scope of the present disclosure. The step 210 comprises of sub-steps which are described as follows. At step 210a of the present disclosure, the one or more hardware processors 104 process, by using a classification technique, the at least the subset of the input training data and one or more covenants of the second covenant category to obtain a set of predicted covenants. In other words, the subset (or the at least the subset) of the input training data serves as a one-time input to the steps 210a through 210c. For instance, say, x% of the input training data is processed wherein x% may be 30% of data (e.g., portion of (i) historical details of one or more entities, (ii) historical loan information corresponding to the entities, (iii) one or more corresponding recommended covenants or (iv) combinations thereof) from the actual input training data. The classification technique may be, but is not limited to, Random Forest, extraTreeClassifier, Logistic Regression, SVM (Support Vector Machine, combinations thereof, and the like. Such examples of classification techniques are comprised in the memory 102 and invoked for execution to perform the method described herein. Further, examples of classification techniques shall not be construed as limiting the scope of the present disclosure. At step 210b of the present disclosure, the one or more hardware processors 104 perform a comparison of (i) number of covenants of the second covenant category comprised in the set of predicted covenants, and (ii) the iteration count. At step 210c of the present disclosure, the one or more hardware processors 104 train a second machine learning model based on the comparison to obtain a second trained machine learning model. The above iterative steps of (i) processing, by using the classification technique, (ii) performing a comparison, and (ii) training the second machine learning model, are better understood by way of following illustrative description.

For instance, covenants that are dependent on each other (e.g., say connected dependent covenant - the second covenant category) are modeled using the classification algorithm/technique as known in the art. In this technique, 'n' number of models are implemented which works in the following fashion: 1st model (Input - All input variables and Output - M1), 2nd model (Input - All input variables+P1 and Output - P2), 3rd model (Input - All input variables + [M1, M2] and Output - M3) and so on. In other words, the second trained machine learning model is obtained based on one or more intermediary machine learning models being trained at each iteration (e.g., M1, M2, M3, and so on). The iteration depends on the number of connected dependent covenant counts. For example, if the number of connected dependent covenants is 6, the steps are executed for 6 iterations. From the output variable correlation analysis, it is evident that the following covenants are dependent on each other wherein First Group - P1, P2, P3, P4 and N4, and Second Group - P6 and N2, Third Group - P7, F1, F3 and F4, and Fourth Group - N1 and N3. This information is used to derive intermediatory machine learning models at each iteration and the final output of the step 208 gives the second trained machine learning model.

Once the two trained machine learning models are generated or obtained, the hardware processors 104 are further configured by the instructions to obtain a test loan application corresponding to an entity. For instance, say the details of the test loan application is stored in a j son file. The j son file is invoked as an input, which comprises, but is not limited to, 'Customer':'CUST1' - (can take null values), 'LOAN_ID':'LOAN6' - (can take null values), 'Sector':'Manufacturing', 'Sub-Sector':'Petroleum Refining & Allied', 'Revenue':773, 'OprProfitMargin': '8.40%', 'DebtEquity':1.79, 'Current_Ratio':1.73, 'Interest_Coverage_Ratio':6.51, 'DSCR':1.65, 'PD_Rating':5, 'Product':'Term Loan', 'Loan_Amt':13.51, 'Collateral':'Property, Plant & Equipment', 'LoanTerm':7, 'RoRWA':'2.50%', 'Guarantor': N, 'ColCovRatio': '118.70%', 'Lien_Order':'First', 'Unemployment Rate': 4, and the like.

After obtaining the above test loan details associated with the entity, the one or more hardware processors 104 apply the first trained machine learning model and the second trained machine learning model on the test loan application corresponding to the entity to obtain a plurality of predicted covenants corresponding to at least one of the first covenant category and the second covenant category. Below Tables 9a and 9b illustrate the plurality of predicted covenants that are of the first covenant category and/or the second covenant category.

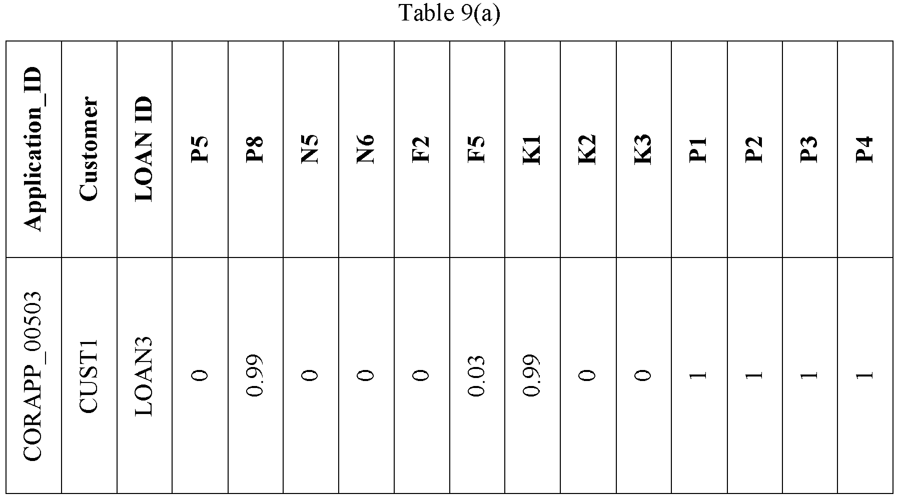

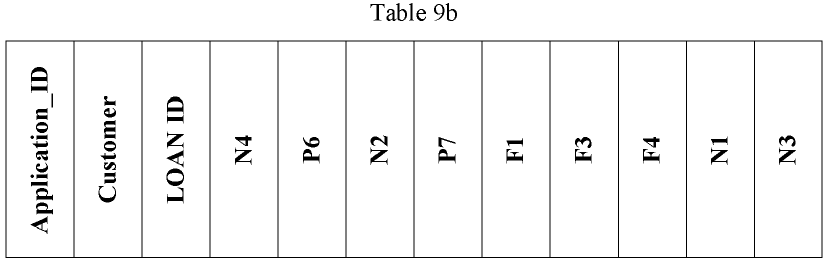

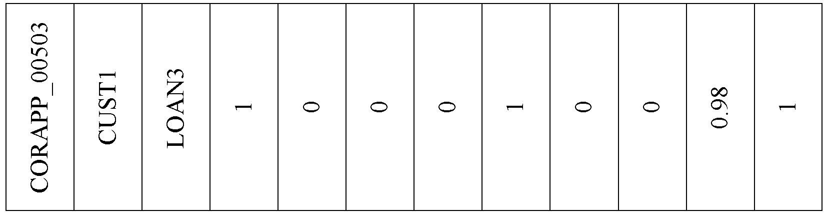

In the above Tables 9a and 9b, disconnected dependent covenants are P8 and K1 which are recommended by the first machine learning model, and connected dependent covenants are P1, P2, P3, P4, N4, F1, N1 and N3 which are recommended by the second machine learning model.

Based on historical data pattern, the hardware processors 104 apply a probability technique on the plurality of predicted covenants corresponding to at least one of the first covenant category and the second covenant category to obtain a set of sorted predicted covenants and an associated probability score thereof. For instance, the sorted predicted covenants may also be referred as optimized, unbiased set of covenants, and interchangeably used herein. In other words, the hardware processors 104 based on historical data pattern, identify one or more rules (e.g., say pre-defined rules comprised in the memory 102) and apply them during prediction on the entities and deal/loan data to calculate the probability score for each covenant. Upon applying rules on entities and deal/loan data, each rule provides a probability value/score for a covenant. Finally, each probability value is aggregated to get the final probability score of a covenant. For instance, a rule may comprise of conditions which compares attribute values of entity and deal/loan data with pre-computed co-efficient. For example, for covenant F1, scaled value of loan term (e.g., say 5 years) is compared with a pre-computed co-efficient of -0.34. In the present disclosure, the scaled value of the loan term may be ranging between -1 to +1. In the current example, say the scaled value of the loan term is say 0.5 (a co-efficient value) which is greater than - 0.34. Since the co-efficient value is greater the pre-computed co-efficient, this predicted covenant is not recommended. The probability score computed for the predicted covenant F1 is based on the total number of predicted covenants, and observations from the training data. The observations comprise which of the covenants are being recommended and which of the covenants are not recommended. Therefore, the probability score is computed based on a ratio of recommended covenants and non-recommended covenants, in one example embodiment of the present disclosure. The probability score computed for each predicted covenant is based on the gini/entropy coefficient, in another example embodiment of the present disclosure. It is to be understood by a person having ordinary skill in the art or person skilled in the art that the above method of computing the probability score and predicting covenants shall not be construed as limiting the scope of the present disclosure.

In an embodiment of the present disclosure, the one or more hardware processors 104 recommend at least a subset of sorted predicted covenants from the set of sorted predicted covenants to a user based on the associated probability score. Based on configured threshold value for probability score, covenants are recommended. The threshold value is dynamically computed targeting the evaluation metric for the desired business outcome, in an example embodiment of the present disclosure. The evaluation metric can be one of these criteria e.g., accuracy, precision, recall, F1, and the like. The range of threshold value may be determined based on its requirement e.g., where the system and method are implemented. For instance, it can take a range of 'x' to 'y' values (e.g., both x and y can take values between 0 and 1).

Once the covenants are recommended a user feedback on the at least the subset of sorted predicted covenants is obtained, and the first trained machine learning model and the second trained machine learning model using the user feedback. User feedback is captured in the same format for each overridden covenant and same is used for model training purpose. The user feedback data is formatted and transformed into the input format as per tables 3(a) and 3(b). The system 100 evaluates the data and looks for updates. The analytical model evaluates the correlation and updates the mapping of input and covenants. For instance, the system **100 may have recommended few covenants as 'Y' (denoting as YES),** and few other **covenants as 'N'. Based on the review by the user (e.g., domain expert or subject** matter expert - who is proficient in covenant management and recommendation), the system recommended covenants may be modified suitably. For example, say 5 **covenants are marked as 'Y' and 3 covenants are marked as 'N' by the system. The** user may provide inputs as for the 5 system recommended ones as top 3 covenants as **'Y' and the remaining 2 covenants as 'N'. Similarly, the user may provide inputs as for the 3 system recommended ones no change in the 'N' marked covenants.**

Embodiments of the present disclosure provide systems and methods that implement data exploration analysis for covenants categorization and recommendation thereof. More specifically, the system and method provide real-time or near real-time covenant recommendations using machine learning models that leverage details associated with customer, deals and stipulations historical data for a specific industry, loan based on the input details provided. The machine learning models as implemented by the system 100 also consider seasonality parameters, recession specific parameters, and the like depending upon the scenario(s) and/or requirement(s). Underwriter gets a list of covenants, and the selection of underwriter is also sent back to the machine learning models as user feedback for further tuning wherein the machine learning models are trained using user feedback to improvise the performance and accuracy of the covenants categorization and recommendation thereof. The system and method of the present disclosure may be used/implemented by financial institutions, insurance companies, banks, and the like where covenant **management is identified as a weak link in the current available 'loan origination systems' available. Such covenant management as described herein when** implemented enables enhance the decision-making ability of the financial institutions, insurance companies, banks, and the like.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. **Also, the words "comprising," "having," "containing," and "including," and other similar forms are intended to be equivalent in meaning and be** open ended in that an item or items following any one of these words is not meant to be an exhaustive listing of such item or items, or meant to be limited to only the listed item or items. It must also be noted that as used herein and in the appended claims, the singular forms **"a," "an," and "the" include plural references unless the context** clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. **The term "computer**-readable **medium" should be understood to include tangible items and exclude carrier waves** and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
obtaining, via one or more hardware processors, an input training data comprising historical details of one or more entities, historical loan information corresponding to the one or more entities, and one or more corresponding recommended covenants (202);
performing, via the one or more hardware processors, a data exploration analysis on the input training data to obtain one or more covenants of at least one of a first covenant category and a second covenant category (204);
training, by using a binary technique via the one or more hardware processors, a first machine learning model based on the input training data and one or more covenants of the first covenant category to obtain a first trained machine learning model (206);
obtaining, via the one or more hardware processors, at least a subset of the input training data (208); and
iteratively performing, via the one or more hardware processors, for each covenant of the second covenant category, until a number of predicted covenants corresponding to the second covenant category is less than or equal to an iteration count, to obtain a second trained machine learning model (210):
processing, by using a classification technique via the one or more hardware processors, the at least the subset of the input training data and one or more covenants of the second covenant category to obtain a set of predicted covenants (210a);
performing a comparison of (i) number of covenants of the second covenant category comprised in the set of predicted covenants, and (ii) the iteration count (210b); and
training, via the one or more hardware processors, the second machine learning model based on the comparison to obtain the second trained machine learning model (210c), wherein the second trained machine learning model is obtained based on one or more intermediary machine learning models being trained at each iteration.

2. The processor implemented method of claim 1, wherein the first covenant category is a disconnected dependent covenant category.

3. The processor implemented method of claim 1, wherein the second covenant category is a connected dependent covenant category.

4. The processor implemented method of claim 1, further comprising:
obtaining, via the one or more hardware processors, a test loan application corresponding to an entity;
applying the first trained machine learning model and the second trained machine learning model on the test loan application corresponding to the entity to obtain a plurality of predicted covenants corresponding to at least one of the first covenant category and the second covenant category;
applying, a probability technique via the one or more hardware processors, on the plurality of predicted covenants corresponding to at least one of the first covenant category and the second covenant category to obtain a set of sorted predicted covenants and an associated probability score thereof; and
recommending, via the one or more hardware processors, at least a subset of sorted predicted covenants from the set of sorted predicted covenants to a user based on the associated probability score.

5. The processor implemented method of claim 4, further comprising:
obtaining a feedback from the user on the at least the subset of sorted predicted covenants; and
training the first trained machine learning model and the second trained machine learning model using the feedback.

6. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
obtain an input training data comprising historical details of one or more entities, historical loan information corresponding to the one or more entities, and one or more corresponding recommended covenants;
perform a data exploration analysis on the input training data to obtain one or more covenants of at least one of a first covenant category and a second covenant category;
train, by using a binary technique, a first machine learning model based on the input training data and one or more covenants of the first covenant category to obtain a first trained machine learning model;
obtain at least a subset of the input training data; and
iteratively perform, for each covenant of the second covenant category, until a number of predicted covenants corresponding to the second covenant category is less than or equal to an iteration count:
processing, by using a classification technique, the at least the subset of the input training data and one or more covenants of the second covenant category to obtain a set of predicted covenants;
performing a comparison of (i) number of covenants of the second covenant category comprised in the set of predicted covenants, and (ii) the iteration count; and
training a second machine learning model based on the comparison to obtain a second trained machine learning model, wherein the second trained machine learning model is obtained based on one or more intermediary machine learning models being trained at each iteration.

7. The system of claim 6, wherein the first covenant category is a disconnected dependent covenant category.

8. The system of claim 6, wherein the second covenant category is a connected dependent covenant category.

9. The system of claim 6, wherein the one or more hardware processors are further configured by the instructions to:
obtain a test loan application corresponding to an entity;
apply the first trained machine learning model and the second trained machine learning model on the test loan application corresponding to the entity to obtain a plurality of predicted covenants corresponding to at least one of the first covenant category and the second covenant category;
apply, a probability technique, on the plurality of predicted covenants corresponding to at least one of the first covenant category and the second covenant category to obtain a set of sorted predicted covenants and an associated probability score thereof; and
recommend at least a subset of sorted predicted covenants from the set of sorted predicted covenants to a user based on the associated probability score.

10. The system of claim 9, wherein the one or more hardware processors are further configured by the instructions to:
obtain a feedback from the user on the at least the subset of sorted predicted covenants; and
train the first trained machine learning model and the second trained machine learning model using the feedback.

11. One or more non-transitory machine-readable information storage mediums comprising one or more instructions which when executed by one or more hardware processors cause:
obtaining an input training data comprising historical details of one or more entities, historical loan information corresponding to the one or more entities, and one or more corresponding recommended covenants;
performing a data exploration analysis on the input training data to obtain one or more covenants of at least one of a first covenant category and a second covenant category;
training, by using a binary technique, a first machine learning model based on the input training data and one or more covenants of the first covenant category to obtain a first trained machine learning model;
obtaining at least a subset of the input training data; and
iteratively performing, for each covenant of the second covenant category, until a number of predicted covenants corresponding to the second covenant category is less than or equal to an iteration count, to obtain a second trained machine learning model:
processing, by using a classification technique, the at least the subset of the input training data and one or more covenants of the second covenant category to obtain a set of predicted covenants;
performing a comparison of (i) number of covenants of the second covenant category comprised in the set of predicted covenants, and (ii) the iteration count; and
training the second machine learning model based on the comparison to obtain the second trained machine learning model, wherein the second trained machine learning model is obtained based on one or more intermediary machine learning models being trained at each iteration.

12. The one or more non-transitory machine-readable information storage mediums of claim 11, wherein the first covenant category is a disconnected dependent covenant category.

13. The one or more non-transitory machine-readable information storage mediums of claim 11, wherein the second covenant category is a connected dependent covenant category.

14. The one or more non-transitory machine-readable information storage mediums of claim 11, wherein one or more instructions which when executed by the one or more hardware processors further cause:
obtaining a test loan application corresponding to an entity;
applying the first trained machine learning model and the second trained machine learning model on the test loan application corresponding to the entity to obtain a plurality of predicted covenants corresponding to at least one of the first covenant category and the second covenant category;
applying a probability technique on the plurality of predicted covenants corresponding to at least one of the first covenant category and the second covenant category to obtain a set of sorted predicted covenants and an associated probability score thereof; and
recommending at least a subset of sorted predicted covenants from the set of sorted predicted covenants to a user based on the associated probability score.

15. The one or more non-transitory machine-readable information storage mediums of claim 14, wherein one or more instructions which when executed by the one or more hardware processors further cause:
obtaining a feedback from the user on the at least the subset of sorted predicted covenants; and
training the first trained machine learning model and the second trained machine learning model using the feedback.

## Patentansprüche

1. Prozessorimplementiertes Verfahren, umfassend:
Erhalten, über einen oder mehrere Hardwareprozessoren, von Eingabetrainingsdaten, die historische Details einer oder mehrerer Entitäten, historische Darlehensinformationen, die der einen oder den mehreren Entitäten entsprechen, und eine oder mehrere entsprechende empfohlene Vereinbarungen (202) umfassen;
Durchführen, über den einen oder die mehreren Hardwareprozessoren, einer Datenexplorationsanalyse an den Eingabetrainingsdaten, um eine oder mehrere Vereinbarungen von mindestens einer von einer ersten Vereinbarungskategorie und einer zweiten Vereinbarungskategorie (204) zu erhalten;
Trainieren, unter Verwendung einer binären Technik über den einen oder die mehreren Hardwareprozessoren, eines ersten Maschinenlernmodells basierend auf den Eingabetrainingsdaten und einer oder mehreren Vereinbarungen der ersten Vereinbarungskategorie, um ein erstes trainiertes Maschinenlernmodell (206) zu erhalten;
Erhalten, über den einen oder die mehreren Hardwareprozessoren, mindestens einer Teilmenge der Eingabetrainingsdaten (208); und
iteratives Durchführen, über den einen oder die mehreren Hardwareprozessoren, für jede Vereinbarung der zweiten Vereinbarungskategorie, bis eine Anzahl von vorhergesagten Vereinbarungen, die der zweiten Vereinbarungskategorie entsprechen, kleiner oder gleich einer Iterationszählung ist, um ein zweites trainiertes Maschinenlernmodell (210) zu erhalten:
Verarbeiten, unter Verwendung einer Klassifizierungstechnik über den einen oder die mehreren Hardwareprozessoren, mindestens der Teilmenge der Eingabetrainingsdaten und einer oder mehrerer Vereinbarungen der zweiten Vereinbarungskategorie, um einen Satz von vorhergesagten Vereinbarungen zu erhalten (210a);
Durchführen eines Vergleichs von (i) der Anzahl von Vereinbarungen der zweiten Vereinbarungskategorie, die im Satz von vorhergesagten Vereinbarungen enthalten sind, und (ii) der Iterationszählung (210b); und
Trainieren, über den einen oder die mehreren Hardwareprozessoren, des zweiten Maschinenlernmodells basierend auf dem Vergleich, um das zweite trainierte Maschinenlernmodell zu erhalten (210c), wobei das zweite trainierte Maschinenlernmodell basierend auf einem oder mehreren intermediären Maschinenlernmodellen erhalten wird, die bei jeder Iteration trainiert werden.

2. Prozessorimplementiertes Verfahren nach Anspruch 1, wobei die erste Vereinbarungskategorie eine nicht verbundene abhängige Vereinbarungskategorie ist.

3. Prozessorimplementiertes Verfahren nach Anspruch 1, wobei die zweite Vereinbarungskategorie eine verbundene abhängige Vereinbarungskategorie ist.

4. Prozessorimplementiertes Verfahren nach Anspruch 1, ferner umfassend:
Erhalten, über den einen oder die mehreren Hardwareprozessoren, einer Testdarlehensanwendung, die einer Entität entspricht;
Anwenden des ersten trainierten Maschinenlernmodells und des zweiten trainierten Maschinenlernmodells auf die Testdarlehensanwendung, die der Entität entspricht, um eine Mehrzahl von vorhergesagten Vereinbarungen zu erhalten, die mindestens einer der ersten Vereinbarungskategorie und der zweiten Vereinbarungskategorie entsprechen;
Anwenden, über den einen oder die mehreren Hardwareprozessoren, einer Wahrscheinlichkeitstechnik auf die Mehrzahl von vorhergesagten Vereinbarungen, die mindestens einer der ersten Vereinbarungskategorie und der zweiten Vereinbarungskategorie entsprechen, um einen Satz von sortierten vorhergesagten Vereinbarungen und eine zugehörige Wahrscheinlichkeitsbewertung davon zu erhalten; und
Empfehlen, über den einen oder die mehreren Hardwareprozessoren, mindestens einer Teilmenge von sortierten vorhergesagten Vereinbarungen aus dem Satz von sortierten vorhergesagten Vereinbarungen an einen Benutzer basierend auf der zugehörigen Wahrscheinlichkeitsbewertung.

5. Prozessorimplementiertes Verfahren nach Anspruch 4, ferner umfassend:
Erhalten einer Rückmeldung von dem Benutzer über die mindestens eine Teilmenge von sortierten vorhergesagten Vereinbarungen; und
Trainieren des ersten trainierten Maschinenlernmodells und des zweiten trainierten Maschinenlernmodells unter Verwendung der Rückmeldung.

6. System (100), umfassend:
einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) verbunden sind, wobei der eine oder die mehreren Hardwareprozessoren (104) durch die Anweisungen konfiguriert sind zum:
Erhalten von Eingabetrainingsdaten, die historische Details einer oder mehrerer Entitäten, historische Darlehensinformationen, die der einen oder den mehreren Entitäten entsprechen, und eine oder mehrere entsprechende empfohlene Vereinbarungen umfassen;
Durchführen einer Datenexplorationsanalyse an den Eingabetrainingsdaten, um eine oder mehrere Vereinbarungen von mindestens einer von einer ersten Vereinbarungskategorie und einer zweiten Vereinbarungskategorie zu erhalten;
Trainieren, unter Verwendung einer binären Technik, eines ersten Maschinenlernmodells basierend auf den Eingabetrainingsdaten und einer oder mehreren Vereinbarungen der ersten Vereinbarungskategorie, um ein erstes trainiertes Maschinenlernmodell zu erhalten;
Erhalten mindestens einer Teilmenge der Eingabetrainingsdaten; und
iteratives Durchführen, für jede Vereinbarung der zweiten Vereinbarungskategorie, bis eine Anzahl von vorhergesagten Vereinbarungen, die der zweiten Vereinbarungskategorie entsprechen, kleiner oder gleich einer Iterationszählung ist;
Verarbeiten, unter Verwendung einer Klassifizierungstechnik, mindestens der Teilmenge der Eingabetrainingsdaten und einer oder mehrerer Vereinbarungen der zweiten Vereinbarungskategorie, um einen Satz von vorhergesagten Vereinbarungen zu erhalten;
Durchführen eines Vergleichs von (i) der Anzahl von Vereinbarungen der zweiten Vereinbarungskategorie, die im Satz von vorhergesagten Vereinbarungen enthalten sind, und (ii) der Iterationszählung; und
Trainieren eines zweiten Maschinenlernmodells basierend auf dem Vergleich, um ein zweites trainiertes Maschinenlernmodell zu erhalten, wobei das zweite trainierte Maschinenlernmodell basierend auf einem oder mehreren intermediären Maschinenlernmodellen erhalten wird, die bei jeder Iteration trainiert werden.

7. System nach Anspruch 6, wobei die erste Vereinbarungskategorie eine nicht verbundene abhängige Vereinbarungskategorie ist.

8. System nach Anspruch 6, wobei die zweite Vereinbarungskategorie eine verbundene abhängige Vereinbarungskategorie ist.

9. System nach Anspruch 6, wobei der eine oder die mehreren Hardwareprozessoren ferner durch die Anweisungen konfiguriert sind zum:
Erhalten einer Testdarlehensanwendung, die einer Entität entspricht;
Anwenden des ersten trainierten Maschinenlernmodells und des zweiten trainierten Maschinenlernmodells auf die Testdarlehensanwendung, die der Entität entspricht, um eine Mehrzahl von vorhergesagten Vereinbarungen zu erhalten, die mindestens einer der ersten Vereinbarungskategorie und der zweiten Vereinbarungskategorie entsprechen;
Anwenden, auf die Mehrzahl von vorhergesagten Vereinbarungen, die mindestens einer der ersten Vereinbarungskategorie und der zweiten Vereinbarungskategorie entsprechen, einer Wahrscheinlichkeitstechnik, um einen Satz von sortierten vorhergesagten Vereinbarungen und eine zugehörige Wahrscheinlichkeitsbewertung davon zu erhalten; und
Empfehlen mindestens einer Teilmenge von sortierten vorhergesagten Vereinbarungen aus dem Satz von sortierten vorhergesagten Vereinbarungen an einen Benutzer basierend auf der zugehörigen Wahrscheinlichkeitsbewertung.

10. System nach Anspruch 9, wobei der eine oder die mehreren Hardwareprozessoren ferner durch die Anweisungen konfiguriert sind zum:
Erhalten einer Rückmeldung von dem Benutzer über die mindestens eine Teilmenge von sortierten vorhergesagten Vereinbarungen; und
Trainieren des ersten trainierten Maschinenlernmodells und des zweiten trainierten Maschinenlernmodells unter Verwendung der Rückmeldung.

11. Ein oder mehrere nichtflüchtige maschinenlesbare Informationsspeichermedien, umfassend eine oder mehrere Anweisungen, die, wenn sie durch einen oder mehrere Hardwareprozessoren ausgeführt werden, bewirken:
Erhalten von Eingabetrainingsdaten, die historische Details einer oder mehrerer Entitäten, historische Darlehensinformationen, die der einen oder den mehreren Entitäten entsprechen, und eine oder mehrere entsprechende empfohlene Vereinbarungen umfassen;
Durchführen einer Datenexplorationsanalyse an den Eingabetrainingsdaten, um eine oder mehrere Vereinbarungen von mindestens einer von einer ersten Vereinbarungskategorie und einer zweiten Vereinbarungskategorie zu erhalten;
Trainieren, unter Verwendung einer binären Technik, eines ersten Maschinenlernmodells basierend auf den Eingabetrainingsdaten und einer oder mehreren Vereinbarungen der ersten Vereinbarungskategorie, um ein erstes trainiertes Maschinenlernmodell zu erhalten;
Erhalten mindestens einer Teilmenge der Eingabetrainingsdaten; und
iteratives Durchführen, für jede Vereinbarung der zweiten Vereinbarungskategorie, bis eine Anzahl von vorhergesagten Vereinbarungen, die der zweiten Vereinbarungskategorie entsprechen, kleiner oder gleich einer Iterationszählung ist, um ein zweites trainiertes Maschinenlernmodell zu erhalten;
Verarbeiten, unter Verwendung einer Klassifizierungstechnik, mindestens der Teilmenge der Eingabetrainingsdaten und einer oder mehrerer Vereinbarungen der zweiten Vereinbarungskategorie, um einen Satz von vorhergesagten Vereinbarungen zu erhalten;
Durchführen eines Vergleichs von (i) der Anzahl von Vereinbarungen der zweiten Vereinbarungskategorie, die im Satz von vorhergesagten Vereinbarungen enthalten sind, und (ii) der Iterationszählung; und
Trainieren des zweiten Maschinenlernmodells basierend auf dem Vergleich, um das zweite trainierte Maschinenlernmodell zu erhalten, wobei das zweite trainierte Maschinenlernmodell basierend auf einem oder mehreren intermediären Maschinenlernmodellen erhalten wird, die bei jeder Iteration trainiert werden.

12. Ein oder mehrere nichtflüchtige maschinenlesbare Informationsspeichermedien nach Anspruch 11, wobei die erste Vereinbarungskategorie eine nicht verbundene abhängige Vereinbarungskategorie ist.

13. Ein oder mehrere nichtflüchtige maschinenlesbare Informationsspeichermedien nach Anspruch 11, wobei die zweite Vereinbarungskategorie eine verbundene abhängige Vereinbarungskategorie ist.

14. Ein oder mehrere nichtflüchtige maschinenlesbare Informationsspeichermedien nach Anspruch 11, wobei eine oder mehrere Anweisungen, die, wenn sie durch den einen oder die mehreren Hardwareprozessoren ausgeführt werden, ferner bewirken:
Erhalten einer Testdarlehensanwendung, die einer Entität entspricht;
Anwenden des ersten trainierten Maschinenlernmodells und des zweiten trainierten Maschinenlernmodells auf die Testdarlehensanwendung, die der Entität entspricht, um eine Mehrzahl von vorhergesagten Vereinbarungen zu erhalten, die mindestens einer der ersten Vereinbarungskategorie und der zweiten Vereinbarungskategorie entsprechen;
Anwenden einer Wahrscheinlichkeitstechnik auf die Mehrzahl von vorhergesagten Vereinbarungen, die mindestens einer der ersten Vereinbarungskategorie und der zweiten Vereinbarungskategorie entsprechen, um einen Satz von sortierten vorhergesagten Vereinbarungen und eine zugehörige Wahrscheinlichkeitsbewertung davon zu erhalten; und
Empfehlen mindestens einer Teilmenge von sortierten vorhergesagten Vereinbarungen aus dem Satz von sortierten vorhergesagten Vereinbarungen an einen Benutzer basierend auf der zugehörigen Wahrscheinlichkeitsbewertung.

15. Ein oder mehrere nichtflüchtige maschinenlesbare Informationsspeichermedien nach Anspruch 14, wobei eine oder mehrere Anweisungen, die, wenn sie durch den einen oder die mehreren Hardwareprozessoren ausgeführt werden, ferner bewirken:
Erhalten einer Rückmeldung von dem Benutzer über die mindestens eine Teilmenge von sortierten vorhergesagten Vereinbarungen; und
Trainieren des ersten trainierten Maschinenlernmodells und des zweiten trainierten Maschinenlernmodells unter Verwendung der Rückmeldung.

## Revendications

1. Procédé mis en oeuvre par processeur, comprenant :
l'obtention, via un ou plusieurs processeurs matériels, de données d'entraînement d'entrée comprenant des détails historiques d'une ou plusieurs entités, des informations de prêt historiques correspondant aux une ou plusieurs entités, et un ou plusieurs engagements recommandés correspondants (202) ;
la réalisation, via les un ou plusieurs processeurs matériels, d'une analyse d'exploration de données sur les données d'entraînement d'entrée pour obtenir un ou plusieurs engagements d'au moins l'une parmi une première catégorie d'engagement et une deuxième catégorie d'engagement (204) ;
l'entraînement, à l'aide d'une technique binaire via les un ou plusieurs processeurs matériels, d'un premier modèle d'apprentissage automatique sur la base des données d'entraînement d'entrée et d'un ou plusieurs engagements de la première catégorie d'engagement pour obtenir un premier modèle d'apprentissage automatique entraîné (206) ;
l'obtention, via les un ou plusieurs processeurs matériels, d'au moins un sous-ensemble des données d'apprentissage d'entrée (208) ; et
la réalisation de manière itérative, via les un ou plusieurs processeurs matériels, pour chaque engagement de la deuxième catégorie d'engagement, jusqu'à ce qu'un nombre d'engagements prédit correspondant à la deuxième catégorie d'engagement soit inférieur ou égal à un nombre d'itérations, pour obtenir un deuxième modèle d'apprentissage automatique entraîné (210) :
le traitement, à l'aide d'une technique de classification via les un ou plusieurs processeurs matériels, de l'au moins un sous-ensemble de données d'entraînement d'entrée et un ou plusieurs engagements de la deuxième catégorie d'engagement pour obtenir un ensemble d'engagements prédits (210a) ;
la réalisation d'une comparaison (i) du nombre d'engagements de la deuxième catégorie d'engagement compris dans l'ensemble d'engagements prédits, et (ii) du nombre d'itérations (210b) ; et
l'entraînement, via les un ou plusieurs processeurs matériels, du deuxième modèle d'apprentissage automatique sur la base de la comparaison pour obtenir le deuxième modèle d'apprentissage automatique entraîné (210c), le deuxième modèle d'apprentissage automatique entraîné étant obtenu sur la base d'un ou plusieurs modèles d'apprentissage automatique intermédiaires étant entraînés à chaque itération.

2. Procédé mis en oeuvre par processeur selon la revendication 1, dans lequel la première catégorie d'engagement est une catégorie d'engagement dépendante et déconnectée.

3. Procédé mis en oeuvre par processeur selon la revendication 1, dans lequel la deuxième catégorie d'engagement est une catégorie d'engagement dépendante et déconnectée.

4. Procédé mis en oeuvre par processeur selon la revendication 1, comprenant en outre :
l'obtention, via les un ou plusieurs processeurs matériels, d'une demande de prêt de test correspondant à une entité ;
l'application du premier modèle d'apprentissage automatique entraîné et du deuxième modèle d'apprentissage automatique entraîné à la demande de prêt de test correspondant à l'entité pour obtenir une pluralité d'engagements prédits correspondant à au moins l'une de la première catégorie d'engagement et/ou de la deuxième catégorie d'engagement ;
l'application d'une technique de probabilité, via les un ou plusieurs processeurs matériels, à la pluralité d'engagements prédits correspondant à au moins l'une parmi la première catégorie d'engagement et/ou la deuxième catégorie d'engagement pour obtenir un ensemble d'engagements prédits triés et un score de probabilité associé à ceux-ci ; et
la recommandation, par l'intermédiaire des un ou plusieurs processeurs matériels, d'au moins un sous-ensemble d'engagements prédits triés parmi l'ensemble d'engagements prédits triés à un utilisateur sur la base du score de probabilité associé.

5. Procédé mis en oeuvre par processeur selon la revendication 4, comprenant en outre :
l'obtention d'un retour de l'utilisateur sur au moins le sous-ensemble d'engagements prédits triés ; et
l'entraînement du premier modèle d'apprentissage automatique entraîné et du deuxième modèle d'apprentissage automatique entraîné à l'aide du retour.

6. Système (100), comprenant :
une mémoire (102) stockant des instructions ;
une ou plusieurs interfaces de communication (106) ; et
un ou plusieurs processeurs matériels (104) couplés à la mémoire (102) via les une ou plusieurs interfaces de communication (106), dans lequel les un ou plusieurs processeurs matériels (104) sont configurés par les instructions pour :
obtenir des données d'entraînement d'entrée comprenant des détails historiques d'une ou plusieurs entités, des informations de prêt historiques correspondant aux une ou plusieurs entités, et un ou plusieurs engagements recommandés correspondants ;
réaliser une analyse d'exploration de données sur les données d'entraînement d'entrée pour obtenir un ou plusieurs engagements d'au moins l'une parmi une première catégorie d'engagement et/ou une deuxième catégorie d'engagement ;
entraîner, à l'aide d'une technique binaire, un premier modèle d'apprentissage automatique sur la base des données d'entraînement d'entrée et d'un ou plusieurs engagements de la première catégorie d'engagement pour obtenir un premier modèle d'apprentissage automatique entraîné ;
obtenir au moins un sous-ensemble des données d'apprentissage d'entrée ; et
effectuer de manière itérative, pour chaque engagement de la deuxième catégorie d'engagement, jusqu'à ce qu'un nombre d'engagements prédit correspondant à la deuxième catégorie d'engagement soit inférieur ou égal à un nombre d'itérations :
traiter, à l'aide d'une technique de classification, l'au moins un sous-ensemble de données d'entraînement d'entrée et un ou plusieurs engagements de la deuxième catégorie d'engagement pour obtenir un ensemble d'engagements prédits ;
effectuer une comparaison (i) du nombre d'engagements de la deuxième catégorie d'engagements compris dans l'ensemble d'engagements prédits, et (ii) du nombre d'itérations ; et
entraîner un deuxième modèle d'apprentissage automatique sur la base de la comparaison pour obtenir le deuxième modèle d'apprentissage automatique entraîné, le deuxième modèle d'apprentissage automatique entraîné étant obtenu sur la base d'un ou plusieurs modèles d'apprentissage automatique intermédiaires étant entraînés à chaque itération.

7. Système selon la revendication 6, dans lequel la première catégorie d'engagement est une catégorie d'engagement dépendante et déconnectée.

8. Système selon la revendication 6, dans lequel la deuxième catégorie d'engagement est une catégorie d'engagement dépendante et déconnectée.

9. Système selon la revendication 6, dans lequel les un ou plusieurs processeurs matériels sont en outre configurés par les instructions pour :
obtenir une demande de prêt test correspondant à une entité ;
appliquer le premier modèle d'apprentissage automatique entraîné et le deuxième modèle d'apprentissage automatique entraîné à l'application de prêt de test correspondant à l'entité pour obtenir une pluralité d'engagements prédits correspondant à au moins l'une de la première catégorie d'engagement et/ou de la deuxième catégorie d'engagement ;
appliquer une technique de probabilité à la pluralité d'engagements prédits correspondant à au moins l'une parmi la première catégorie d'engagement et/ou la deuxième catégorie d'engagement pour obtenir un ensemble d'engagements prédits triés et un score de probabilité associé à ceux-ci ; et
recommander au moins un sous-ensemble d'engagements prédits triés parmi l'ensemble d'engagements prédits triés à un utilisateur sur la base du score de probabilité associé.

10. Système selon la revendication 9, dans lequel les un ou plusieurs processeurs matériels sont en outre configurés par les instructions pour :
obtenir un retour de l'utilisateur sur au moins le sous-ensemble d'engagements prédites triées ; et
entraîner le premier modèle d'apprentissage automatique entraîné et le deuxième modèle d'apprentissage automatique entraîné à l'aide du retour.

11. Un ou plusieurs supports de stockage d'informations non transitoires lisibles par machine comprenant une ou plusieurs instructions qui, lorsqu'elles sont exécutées par un ou plusieurs processeurs matériels, provoquent :
l'obtention de données d'entraînement d'entrée comprenant des détails historiques d'une ou plusieurs entités, des informations de prêt historiques correspondant aux une ou plusieurs entités, et un ou plusieurs engagements recommandés correspondants ;
la réalisation d'une analyse d'exploration de données sur les données d'entraînement d'entrée pour obtenir un ou plusieurs engagements d'au moins l'une parmi une première catégorie d'engagement et/ou une deuxième catégorie d'engagement ;
l'entraînement, à l'aide d'une technique binaire, d'un premier modèle d'apprentissage automatique sur la base des données d'entraînement d'entrée et d'un ou plusieurs engagements de la première catégorie d'engagement pour obtenir un premier modèle d'apprentissage automatique entraîné ;
l'obtention d'au moins un sous-ensemble des données d'apprentissage d'entrée ; et
la réalisation de manière itérative, pour chaque engagement de la deuxième catégorie d'engagement, jusqu'à ce qu'un nombre d'engagements prédit correspondant à la deuxième catégorie d'engagement soit inférieur ou égal à un nombre d'itérations, pour obtenir un deuxième modèle d'apprentissage automatique entraîné :
le traitement, à l'aide d'une technique de classification, de l'au moins un sous-ensemble de données d'entraînement d'entrée et d'un ou plusieurs engagements de la deuxième catégorie d'engagement pour obtenir un ensemble d'engagements prédits ;
la réalisation d'une comparaison (i) du nombre d'engagements de la deuxième catégorie d'engagements compris dans l'ensemble d'engagements prédits, et (ii) du nombre d'itérations ; et
l'entraînement du deuxième modèle d'apprentissage automatique sur la base de la comparaison pour obtenir le deuxième modèle d'apprentissage automatique entraîné, le deuxième modèle d'apprentissage automatique entraîné étant obtenu sur la base d'un ou plusieurs modèles d'apprentissage automatique intermédiaires formés à chaque itération.

12. Un ou plusieurs supports de stockage d'informations lisibles par machine non transitoires selon la revendication 11, dans lesquels la première catégorie d'engagement est une catégorie d'engagement dépendante et déconnectée.

13. Un ou plusieurs supports de stockage d'informations non transitoires lisibles par machine selon la revendication 11, dans lesquels la deuxième catégorie d'engagement est une catégorie d'engagement dépendante et connectée.

14. Un ou plusieurs supports de stockage d'informations non transitoires lisibles par machine selon la revendication 11, dans lesquels une ou plusieurs instructions qui, lorsqu'elles sont exécutées par un ou plusieurs processeurs matériels, provoquent en outre :
l'obtention d'une demande de prêt test correspondant à une entité ;
l'application du premier modèle d'apprentissage automatique entraîné et du deuxième modèle d'apprentissage automatique entraîné à la demande de prêt de test correspondant à l'entité pour obtenir une pluralité d'engagements prédits correspondant à au moins l'une de la première catégorie d'engagement et/ou de la deuxième catégorie d'engagement ;
l'application d'une technique de probabilité,, à la pluralité d'engagements prédits correspondant à au moins l'une parmi la première catégorie d'engagement et/ou la deuxième catégorie d'engagement pour obtenir un ensemble d'engagements prédits triés et un score de probabilité associé à ceux-ci ; et
la recommandation d'au moins un sous-ensemble d'engagements prédits triés parmi l'ensemble d'engagements prédits triés à un utilisateur sur la base du score de probabilité associé.

15. Un ou plusieurs supports de stockage d'informations non transitoires lisibles par machine selon la revendication 14, dans lesquels une ou plusieurs instructions qui, lorsqu'elles sont exécutées par un ou plusieurs processeurs matériels, provoquent en outre :
l'obtention d'un retour de l'utilisateur sur au moins le sous-ensemble d'engagements prédits triés ; et
l'entraînement du premier modèle d'apprentissage automatique entraîné et du deuxième modèle d'apprentissage automatique entraîné à l'aide du retour.
